# EUROPEAN PATENT APPLICATION

(11) **EP 4 834 557 A1**
(43) Date of publication of application: **04.11.2026**
(21) Application number: 26168356.9
(22) Date of filing: 27.03.2026
(51) Int. Cl.: B29B 7/74, B29B 7/40, B29B 7/42, B29C 48/53, B29C 48/59, B29C 48/395, B29C 48/535, B29C 48/54

(54) **RUBBER EXTRUDER AND RUBBER EXTRUSION METHOD**

(30) Priority: 01.05.2025 JP 2025076416
(71) Applicant: Sumitomo Rubber Industries, Ltd., Kobe-shi, Hyogo 651-0072 (JP)
(72) Inventor: SHOKYO, Katsuya, Kobe-shi, 651-0072 (JP); SAKAMOTO, Masayuki, Kobe-shi, 651-0072 (JP); KAWAMURA, Takanobu, Kobe-shi, 651-0072 (JP)
(74) Representative: Manitz Finsterwald Patent- und Rechtsanwaltspartnerschaft mbB

(57) **Abstract**

A rubber extruder 1 comprises a barrel 2, an feeding portion 3 for feeding chipped rubber material G into the barrel 2, a discharging portion 4 for discharging the rubber material G from the barrel 2, and a screw 5 for pushing the rubber material G from the feeding portion 3 to the discharging portion 4. The screw 5 comprises a screw shaft 6 and a flight 7 extending spirally around the screw shaft 6. Pitch lengths P and a height H of the flight 7 are each greater than the maximum dimension GL of the chipped rubber material G to be fed.

## Description

### Technical field

The present invention relates to a rubber extruder and a rubber extrusion method.

### Background art

Rubber extruders for kneading and extruding unvulcanized rubber have been well known. For example, Patent Document 1 below discloses a rubber extruder which achieves both productivity and quality by providing a dam section in the screw and specifying an effective screw length.

Patent Document 1: Japanese Patent Application Publication No. 2018-199272

### Summary of the Invention

### Problems to be solved by the Invention

In the rubber extruder disclosed in Patent Document 1, the screw needs a certain effective length to plasticize the fed rubber material. As a result, maintenance work such as checking whether the rubber material is remained on the screw when changing the kinds of rubber materials, and removing the remained rubber material, could take a lot of time and effort.

The present invention was made in view of the circumstances as described above, and a primary objective of the present invention is to provide a rubber extruder and a rubber extrusion method in which maintenance time can be reduced.

### Means for solving the problems

According to the present invention, a rubber extruder comprises: a barrel; a feeding portion for feeding chipped rubber material into the barrel; a discharging portion for discharging the rubber material from the barrel; and a screw for pushing forward the fed rubber material from the feeding portion to the discharging portion, the screw comprising a screw shaft extending along the pushing-forward direction of the rubber material, and a flight extending spirally around the screw shaft, wherein
pitch lengths and a height of the flight are each greater than the maximum dimension of the chipped rubber material to be fed.

### Effects of the Invention

In the rubber extruder according to the present invention, by having the above-described configuration, its maintenance can be performed in a short time.

### Brief description of the Drawings

FIG. 1 is a schematic diagram showing a rubber extruder as an embodiment of the present invention.
FIG. 2 is an enlarged cross-sectional view of the discharging portion of the rubber extruder.
FIG. 3 is a flowchart of a rubber extrusion method as an embodiment of the present invention.
FIG. 4 is a schematic diagram showing the rubber extruder of the present embodiment during its maintenance.
FIG. 5 is a schematic diagram showing a rubber extruder as a second embodiment of the present invention during its maintenance.
FIG. 6 is a schematic diagram showing a rubber extruder as a third embodiment of the present invention during its maintenance.

### Mode for carrying out the Invention

Embodiments of the present invention will now be described in detail in conjunction with the accompanying drawings.

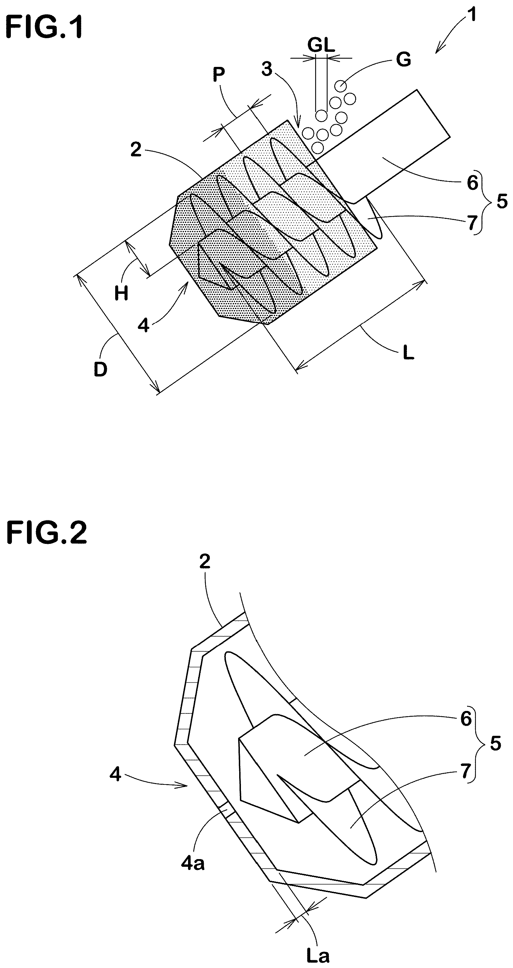

FIG. 1 is a schematic diagram showing a rubber extruder 1 as a first embodiment of the present invention.

As shown in FIG. 1, the rubber extruder 1 in the present embodiment comprises: a barrel 2; a feeding portion 3 for feeding chipped rubber material G into the barrel 2; and a discharging portion 4 for discharging the rubber material G from the barrel 2.

The rubber material G to be fed is in the form of chips, therefore, the rubber material G does not need to be plasticized in the rubber extruder 1, which helps to prevent excessive heat generation.

The rubber extruder 1 in the present embodiment comprises a screw 5 for pushing forward the chipped rubber material G from the feeding portion 3 to the discharging portion 4.

The screw 5 comprises a screw shaft 6 extending along the pushing-forward direction of the rubber material G, and a flight 7 extending spirally around the screw shaft 6. Such rubber extruder 1 can push and smoothly move the rubber material G toward the discharging portion 4.

In the present embodiment, the pitch lengths P of the flight 7 and the height H of the flight 7 are each greater than the maximum dimension GL of the chipped rubber material G to be fed. In other words, the cross section of the helical flow path formed by the spiral flight 7 is greater than the maximum dimension of the chips. Such screw 5 can knead and push forward the chipped rubber material G even if the total effective screw length L of the screw 5 is small.

As a result, the number of parts or positions that need to be checked during maintenance can be reduced. Thus, the rubber extruder 1 according to the present embodiment can be maintained in a short time.

Preferably, the ratio L/D of the total effective screw length L of the screw 5 to the outer diameter D of the screw 5 as shown in FIG. 1, is set to be not more than 8. By setting the ratio L/D to be not more than 8, the manufacturing cost of the screw 5 can be reduced, and the time required for maintenance can be reliably shortened. From this viewpoint, the ratio L/D is more preferably not more than 5.

Here, the total effective screw length L of the screw 5 is the length from the feeding portion 3 of the flight 7 to the discharging portion 4.

The maximum dimension GL of the chipped rubber material G to be fed is preferably not more than 10 mm.

By setting the maximum dimension GL of the chipped rubber material G to not more than 10 mm, heat generation during pushing-forward can be suppressed, and deterioration in the quality of the rubber material G due to heat can be suppressed. From this viewpoint, the maximum dimension GL is more preferably not more than 7 mm, still more preferably not more than 5 mm.

The temperature of the chipped rubber material G to be fed is preferably not lower than 25 degrees C.

By keeping the temperature of the rubber material G at 25 degrees C or higher, the fluidity of the rubber material G can be ensured, which helps to improve the stability of the quality of the extruded rubber material G.

From this viewpoint, the temperature of the rubber material G to be fed is more preferably 35 degrees C or higher.

The temperature of the rubber material G to be fed is preferably not higher than 70 degrees C.

By keeping the temperature of the rubber material G at 70 degrees C or lower, deterioration in the quality of the rubber material G due to heat can be suppressed, which helps to improve the stability of the quality of the extruded rubber material G. From this viewpoint, the temperature of the rubber material G to be fed is more preferably not higher than 60 degrees C.

From the above, the temperature of the rubber material G to be fed is preferably 25 to 70 degrees C, more preferably 35 to 60 degrees C.

The combination of the upper limit value and the lower limit value of the numerical range for the temperature can be arbitrarily selected from the values listed as above.

In the present embodiment, the screw shaft 6 extends in a direction inclined with respect to the horizontal direction.

The screw shaft 6 is inclined so that the height decreases from the feeding portion 3 to the discharging portion 4.

In such rubber extruder 1, the chipped rubber material G can be conveyed toward the discharging portion 4 by the gravity, and it becomes possible to prevent excessive heat generation from the rubber material G.

The inclination angle θ of the screw shaft 6 with respect to the horizontal direction is preferably 30 degrees or more.

By setting the inclination angle θ of the screw shaft 6 to 30 degrees or more, the rubber material G can be conveyed toward the discharging portion 4 without excessive heat generation, which helps to improve the stability of the quality of the extruded rubber material G.

From this viewpoint, the inclination angle θ of the screw shaft 6 with respect to the horizontal direction is more preferably 45 degrees or more.

However, the inclination angle θ of the screw shaft 6 with respect to the horizontal direction is preferably 75 degrees or less.

By setting the inclination angle θ of the screw shaft 6 to 75 degrees or less, it becomes possible to prevent the rubber material G from being extruded without being sufficiently kneaded, which helps to improve the stability of the quality of the extruded rubber material G.

From this viewpoint, the inclination angle θ of the screw shaft 6 with respect to the horizontal direction is more preferably 60 degrees or less.

From the above, the inclination angle θ of the screw shaft 6 with respect to the horizontal direction is preferably 30 to 75 degrees, more preferably 45 to 60 degrees.

The combination of the upper limit value and the lower limit value of the numerical range for the inclination angle θ can be arbitrarily selected from the values listed as above.

It is preferable that the feeding portion 3 is configured to be able to change the feeding position of the chipped rubber material G relative to the flight 7 of the screw 5. For example, by providing a plurality of the feeding portions 3 or by making the feeding portion 3 movable, the position at which the rubber material G is fed can be changed.

By providing such movable feeding portion or multi feeding portions 3, it becomes possible select the feeding position relative to the flight 7 according to the type and size of the rubber material G, and as a result, excessive heat generation in the rubber material G can be suppressed and the stability of the quality of the extruded rubber material G can be improved.

FIG. 2 is an enlarged cross-sectional view of the discharging portion 4.

As shown in FIG. 2, the discharging portion 4 of the present embodiment comprises a discharge port 4a which has the same cross-sectional area while extending in a direction in which the rubber material G is to be extruded. The discharge port 4a can adjust the shape of the extruded rubber material G.

Usually, a die is provided at the front end of the discharging portion 4, but is omitted here.

The length La of the discharge port 4a in the extrusion direction is preferably 10 mm or more.

By setting the length La of the discharge port 4a to 10 mm or more, shrinkage of the extruded rubber material G can be suppressed, which helps to improve the stability of the quality of the extruded rubber material G.

From this viewpoint, the length La of the discharge port 4a is more preferably 20 mm or more.

However, the length La of the discharge port 4a in the extrusion direction is preferably 50 mm or less.

By setting the length La of the discharge port 4a to 50 mm or less, it is possible to prevent the rubber material G from excessive heat generation at the discharge port 4a, which helps to improve the stability of the quality of the extruded rubber material G. From this viewpoint, the length La of the discharge port 4a is more preferably 40 mm or less.

From the above, the length La of the discharge port 4a in the extrusion direction is preferably 10 to 50 mm, and more preferably 20 to 40 mm.

The combination of the upper limit value and the lower limit value of the numerical range for the length La can be arbitrarily selected from the values listed as above.

The pressure of the rubber material G at the discharging portion 4 is preferably 3 MPa or higher.

By setting the pressure of the rubber material G to 3 MPa or higher, it becomes possible to reduce the residual strain of the extruded rubber material G, which helps to improve the stability of the quality of the extruded rubber material G.

From this viewpoint, the pressure of the rubber material G is more preferably 4 MPa or higher, still more preferably 5 MPa or higher.

However, t¥e pressure of the rubber material G at the discharging portion 4 is preferably 10 MPa or lower.

By setting the pressure of the rubber material G at 10 MPa or lower, it is possible to prevent the rubber material G from excessive heat generation at the discharging portion 4, which helps to improve the stability of the quality of the extruded rubber material G.

From this viewpoint, the pressure of the rubber material G is more preferably 8 MPa or lower, still more preferably 7 MPa or lower.

From the above, the pressure of the rubber material G at the discharging portion 4 is preferably 3 to 10 MPa, more preferably 4 to 8 MPa, still more preferably 5 to 7 MPa.

The combination of the upper limit value and the lower limit value of the numerical range for the pressure can be arbitrarily selected from the values listed as above.

Next, with reference to FIGS. 1 and 2, a rubber extrusion method for extruding a rubber material G by the use of the rubber extruder 1 in the present embodiment, will be explained.

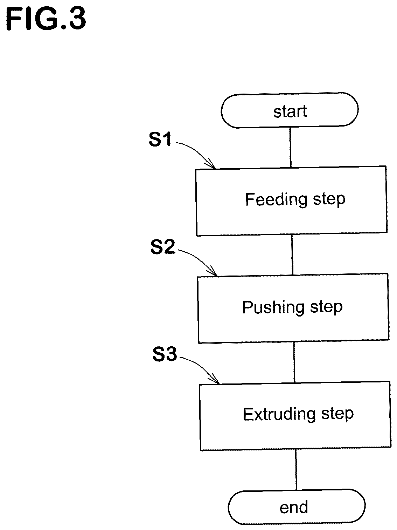

FIG. 3 is a flowchart of the rubber extrusion method as an embodiment of the present invention.

As shown in FIG. 3, the rubber extrusion method in the present embodiment comprises a feeding step S1 of feeding the chipped rubber material G into the barrel 2 of the rubber extruder 1, wherein
the maximum dimension GL of the chipped rubber material G to be fed is preferably smaller than the pitch lengths P of the flight 7 of the screw 5 and the height H of the flight 7 .

Such feeding step S1 can efficiently knead and extrude the rubber material G, and does not require a heating step, so the rubber material G of stable quality can be extruded by the use of the screw 5 having the short total effective screw length L. Therefore, the rubber extrusion method in the present embodiment can reduce the number of parts or positions of the screw 5 that need to be checked during maintenance, which helps to perform the maintenance in a short time.

The rubber extrusion method in the present embodiment comprises a pushing step S2 of pushing the rubber material G toward the discharging portion 4 from the feeding portion 3 of the rubber extruder 1 by the use of the screw 5.

In the pushing step S2 of the present embodiment, the rubber material G can be efficiently kneaded and conveyed even with a short total effective screw length **L,** and thereby, excessive heat generation in the rubber material G can be suppressed.

The rubber extrusion method in the present embodiment comprises an extruding step S3 of extruding the rubber material G from the discharging portion 4 of the barrel 2.

In the extruding step S3 of the present embodiment, the rubber material G can be extruded in a state where heat generation of the rubber material G is suppressed, therefore, the stability of the quality of the extruded rubber material G can be improved.

In the extruding step S3, the shape of the extruded rubber material G can be stably adjusted.

Therefore, the rubber extrusion method of the present embodiment does not require a heating step, and the stability of the quality of the extruded rubber material G can be improved.

Next, a maintenance method for the rubber extruder 1 as an embodiment of the present invention will be described.

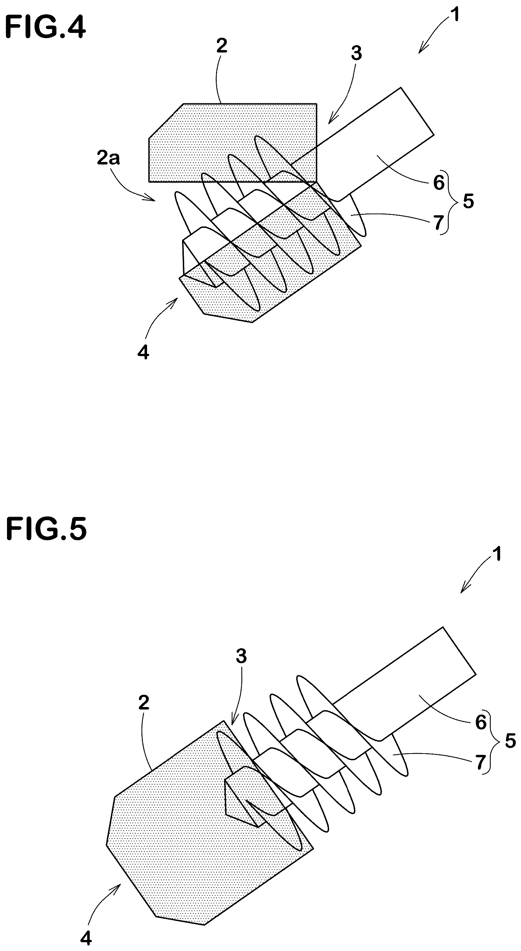

FIG. 4 is a diagram schematically showing the rubber extruder 1 during maintenance according to the present embodiment.

As shown in FIG. 4, the barrel 2 of the rubber extruder 1 of the present embodiment comprises an opening 2a that can be opened during maintenance.

Such opening 2a makes it easy to perform the maintenance work such as replacing the rubber material G to be extruded and cleaning the rubber extruder 1, thereby further reducing the time required for the maintenance.

It is desirable that the opening 2a has an opening area that allows the entire flight 7 of the screw 5 to be visible.

Such opening 2a makes it easy to remove the rubber material G adhering to the flow path formed between the adjacent helical portions of the flight 7, which further reduces the maintenance time.

Such maintenance method has become possible as a result of a drastically reduced total effective screw length L of the screw 5 because a relatively long total effective screw length which was previously required to exert a function as heat-up process to plasticize the fed rubber material G is no longer necessary.

FIG. 5 is a schematic diagram showing the rubber extruder 1 during maintenance according to a second embodiment of the present invention.

The same components as those in the above-described embodiment are denoted by the same reference numerals, and the description thereof will be omitted.

As shown in FIG. 5, in the rubber extruder 1 in the second embodiment, the screw 5 is configured to be removable from the barrel 2 along the direction in which the screw shaft 6 extends.

The screw 5 in the second embodiment can be extracted from the feeding portion 3 side of the barrel 2.

In such rubber extruder 1, by extracting the screw 5, the entire area of the flight 7 can be visually inspected without providing the opening 2a, thereby making the maintenance work easy and further reducing the time required for maintenance.

Such maintenance method has become possible as a result of a drastically reduced total effective screw length L of the screw 5 because a relatively long total effective screw length which was previously required to exert a function as heat-up process to plasticize the fed rubber material G is no longer necessary.

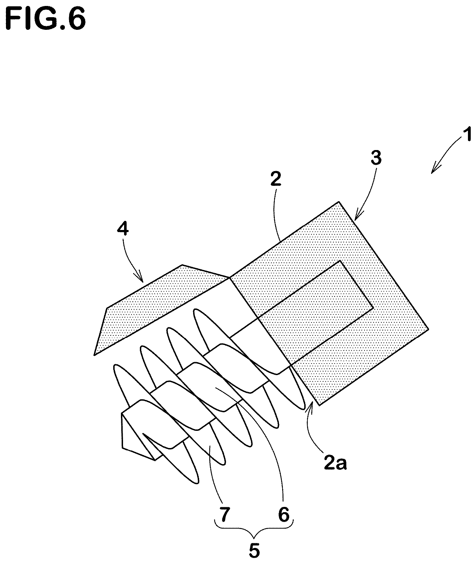

FIG. 6 is a schematic diagram showing the rubber extruder 1 during maintenance according to a third embodiment of the present invention.

The same components as those in the above-described embodiment are denoted by the same reference numerals, and the description thereof will be omitted.

As shown in FIG. 6, in the rubber extruder 1 in the third embodiment, the screw 5 is configured to be extracted from the barrel 2 along the extending direction of the screw shaft 6, similarly to the second embodiment.

The screw 5 in the third embodiment can be extracted from the barrel 2 through the opening 2a on the discharging portion 4 side.

In such rubber extruder 1, the screw 5 can be easily moved to another location for maintenance, which makes the maintenance work easier and further reduces the time required for the maintenance work.

Such maintenance method has become possible as a result of a drastically reduced total effective screw length L of the screw 5 because a relatively long total effective screw length which was previously required to exert a function as heat-up process to plasticize the fed rubber material G is no longer necessary.

While detailed description has been made of preferable embodiments of the present invention, the present invention can be embodied in various forms without being limited to the illustrated embodiments.

### Description of the reference signs

- 1: rubber extruder
- 2: barrel
- 3: feeding portion
- 4: discharging portion
- 5: screw
- 6: screw shaft
- 7: flight

## Claims

1. A rubber extruder comprising: a barrel; a feeding portion for feeding chipped rubber material into the barrel; a discharging portion for discharging the rubber material from the barrel; and a screw for pushing forward the rubber material from the feeding portion to the discharging portion, the screw comprising a screw shaft extending along the pushing-forward direction for the rubber material and a flight extending spirally around the screw shaft, wherein
pitch lengths of the flight and a height of the flight are each greater than a maximum dimension of the chipped rubber material to be fed.

2. The rubber extruder according to claim 1, wherein
a ratio L/D of a total effective screw length L of the screw to an outer diameter D of the screw is not more than 8.

3. The rubber extruder according to claim 1 or 2, wherein
the maximum dimension of the chipped rubber material to be fed is not more than 10 mm.

4. The rubber extruder according to any one of claims 1 to 3, wherein
the temperature of the chipped rubber material to be fed is not lower than 25 degrees C.

5. The rubber extruder according to any one of claims 1 to 4, wherein
the screw shaft extends in a direction inclined with respect to the horizontal direction.

6. The rubber extruder according to claim 5, wherein
the inclination angle of the screw shaft with respect to the horizontal direction is not less than 30 degrees.

7. The rubber extruder according to any one of claims 1 to 6, wherein
the pressure of the rubber material at the discharging portion is not lower than 3 MPa.

8. The rubber extruder according to any one of claims 1 to 7, wherein
the discharging portion comprises a discharge port extending with the same cross-sectional area in the extrusion direction of the rubber material, and
the length of discharge port in the extrusion direction is not less than 30 mm.

9. The rubber extruder according to any one of claims 1 to 8, wherein
the feeding portion is configured to be capable of changing the feeding position of the rubber material relative to the flight of the screw.

10. The rubber extruder according to any one of claims 1 to 9, wherein
the barrel is provided with an opening which can be opened and closed, and
the opening has an opening area that allows the entire area of the screw to be visible.

11. The rubber extruder according to any one of claims 1 to 9, wherein
the screw is configured to be removable from the barrel along a direction in which the screw shaft extends.

12. A rubber extrusion method for extruding a rubber material using a rubber extruder, comprising:
a feeding step of feeding chipped rubber material into a barrel of the rubber extruder;
a pushing step of pushing the chipped rubber material from a feeding portion toward a discharging portion of the rubber extruder by using a screw of the rubber extruder; and
a extruding step of extruding the rubber material from the barrel, wherein
the maximum dimension of the chipped rubber material to be fed is smaller than pitch lengths and a height of a flight of the screw.
